Europäisches Patentamt

(19) European Patent Office

Office européen des brevets

(11) Numéro de publication: **0 172 797**
**B1**

(12) **FASCICULE DE BREVET EUROPEEN**

(45) Date de publication du fascicule du brevet: **30.01.91**

(21) Numéro de dépôt: **85870078.4**

(22) Date de dépôt: **30.05.85**

(51) Int. Cl.⁵: **G 05 B 19/04**

(54) Séquenceur transitionel programmable.

(30) Priorité: **04.06.84 US 616588**

(43) Date de publication de la demande:
**26.02.86 Bulletin 86/09**

(45) Mention de la délivrance du brevet:
**30.01.91 Bulletin 91/05**

(84) Etats contractants désignés:
**AT BE CH DE FR GB IT LI NL SE**

(56) Documents cités:
**EP-A-0 088 135**
**DE-A-2 944 711**
**US-A-4 142 246**
**US-A-4 223 379**
**US-A-4 319 319**

(73) Titulaire: **FABRICOM**
**rue Gatti de Gamond 254**
**B-1180 Bruxelles (BE)**

(72) Inventeur: **Florine, Jean**
**13 Rue Kriekenput**
**B-1180 Bruxelles (BE)**

(74) Mandataire: **Vanderperre, Robert et al**
**Bureau VANDER HAEGHEN 63 Avenue de la**
**Toison d'Or**
**B-1060 Bruxelles (BE)**

Courier Press, Leamington Spa, England.

## Description

La présente invention concerne un dispositif de commande logique destiné à la commande séquentielle du fonctionnement d'organes et machines appartenant à une installation industrielle.

Un dispositif de commande programmable typique, appelé aussi automate programmable (PLC), comprend essentiellement des modules d'entrées-sorties, une mémoire et une unité de traitement centrale (circuit de logique ou microprocesseur). Les modules d'entrées-sorties reçoivent des signaux des appareils externes (interrupteurs, thermocouples, vannes, etc). Ces signaux sont des mesures de grandeurs physiques telles que pression, débit, température, etc., qui sont convertis en information utilisable, de type analogique ou numérique. L'unité de traitement centrale commande toutes les fonctions de l'automate. C'est elle qui organise la scrutation de signaux d'entrée, les évalue en fonction des données stockées en mémoire et déclenche alors les signaux de sortie qui commandent les dispositifs externes. La mémoire contient les instructions de commande, c'est-à-dire toutes les informations précisant comment les données d'entrée et de sortie doivent être traitées. Une console de programmation est utilisée avec l'automate pour charger le programme de traitement dans la mémoire, habituellement à l'aide d'un language de programmation. La console de programmation peut aller d'un simple dispositif manuel à un terminal vidéo sophistiqué.

Les dispositifs de commande programmables connus sont basés sur la détection de combinaisons de valeurs des variables d'entrée et ils utilisent des logiciels stockés en mémoire pour produire les signaux de commande correspondant aux combinaisons de variables d'entrée. Un dispositif exemplaire est connu par le document US—A—4142246. Ce document décrit un contrôleur de séquence comprenant une mémoire dans laquelle sont emmagasinés les différents ensembles d'états des signaux d'entrée, cette mémoire étant adressée par un registre et un compteur. La mémoire délivre non seulement des signaux de sortie, mais également des signaux de commande pour les circuits logiques d'entrée (circuits ET) afin de sélectionner certains signaux d'entrée prédéterminés. De plus, les signaux d'entrée sont appliqués à un encodeur de priorité qui a pour rôle de déterminer quel signal d'entrée doit commander la mémoire.

Ce dispositif connu se distingue par les particularités suivantes:

1) Les signaux de commande pour les circuits ET d'entrée sont dérivés du contenu de la mémoire pour chaque étape: l'évolution de la commande dépend donc de la logique programmée et les signaux de commande sont simultanés. Les entrées ne sont donc pas scrutées successivement et périodiquement.

2) La présence d'un encodeur de priorité ne garantit pas que tous les signaux d'entrée soient examinés: un signal d'entrée n'est vu que s'il n'y a pas d'autres signaux actifs ayant une priorité plus élevée.

3) L'étape définie par la mémoire représente un ensemble de signaux d'entrée sélectionnés par programmation et n'est pas définie par l'état interne du séquenceur.

4) La durée de cycle est variable et dépend de la programmation et de l'activité des entrées, ce qui empêche le fonctionnement en évolutions parallèles.

5) Un changement d'état d'un signal d'entrée fait passer le système d'un état stable vers un état instable qui entraîne une évolution jusqu'au moment où l'état nouvellement atteint est stable vis-à-vis de la nouvelle configuration des entrées.

6) L'état du dispositif n'étant pas défini, il ne peut y avoir de modification des fonctions de sortie sans affecter l'état interne du dispositif.

Malgré leurs avantages par rapport aux micro-ordinateurs et aux automates à logique câblée, les automates programmables connus présentent certains inconvénients qui constituent des obstacles à une large adoption de ces automates. Parmi ces inconvénients on peut citer:

1) La programmation du logiciel prend une importance démesurée et rend difficile le dialogue direct entre l'ingénier système et la machine. Celle-ci n'est pas assez transparente pour l'ingénieur système qui n'est pas un informaticien. Le besoin commence donc à se faire sentir d'une méthode de programmation simple et universelle, applicable à des commandes séquentielles aussi bien que combinatoires.

2) La lenteur relative des automates connus (en moyenne 50 millisecondes entre deux scrutations consécutives) ne leur permet pas de rivaliser avec les machines à logique câblée (en moyenne moins de 200 nanosecondes entre deux scrutations successives) dans certaines applications de commande séquentielle qui exigent une vitesse élevée, par exemple dans la surveillance des réseaux électriques ou dans d'autres applications en temps réel.

3) Il n'est généralement pas possible de prendre en considération tous les événements significatifs qui peuvent influencer les évolutions des automates, ce qui interdit pratiquement leur usage dans les environnements où des contraintes rigoureuses de sécurité s'imposent (par exemple, certaines application en génie nucléaire) car les automates programmables connus ne peuvent empêcher le système contrôle d'être sujet à des évolutions imprévues et potentiellement dangereuses.

L'invention a pour but la réalisation de dispositifs de commande logique qui ne présentent pas les inconvénients et les limitations des machines programmables classiques spécialement conçues pour la commande séquentielle et qui permettent des évolutions parallèles, c'est-à-dire le traitement simultané de diverses tâches par des unités différentes en mode synchronisé, avec ou sans hiérarchie.

Ce but est atteint selon la présente invention par un dispositif de commande logique destiné à la commande séquentielle du fonctionnement d'organes appartenant à une installation industrielle suivant une séquence de commande composée d'étapes successives d'un processus industriel, lequel dispositif comprend:

1) une mémoire séquentielle dont chaque emplacement de mémorisation contient des données qui identifient l'étape suivante du processus, chaque emplacement étant identifié par la combinaison d'un signal d'étape actuelle et d'un signal d'adresse d'étape provenant d'un circuit de détection d'entrée,

2) le circuit de détection d'entrée comprenant N détecteurs de transition d'état d'un signal d'entrée, chaque détecteur étant connecté pour recevoir un signal d'entrée distinct représentant l'état actuel d'un des organes précités et pour recevoir une impulsion de scrutation distincte provenant d'un générateur d'impulsions de scrutation engendrant N impulsions de scrutation régulièrement décalées dans le temps, chaque détecteur étant agencé pour produire un signal de changement d'étape lorsqu'une transition d'état du signal d'entrée se produit en même temps qu'une impulsion de scrutation,

3) un moyen pour produire le signal d'adresse d'étape correspondant à la détection d'une transition d'état d'un signal d'entrée lorsqu'une transition d'état au moins s'est produite pendant le cycle de scrutation.

Une mémoire de fonctions de sortie emmagasine des signaux d'ordres qui identifient les commandes pour les organes sous contrôle, la mémoire de fonctions de sortie étant connectée à la mémoire séquentielle afin de recevoir les données identifiant l'étape suivante et de délivrer les signaux d'ordres pour la commande des organes correspondants.

Grâce à la détection des transitions d'états au lieu de la détection de niveaux et grâce au fait que les signaux de détection de transition d'état produits ne sont jamais simultanés, il devient possible de coder l'ensemble des événements possibles à un instant donné quelconque dans une séquence de commande au moyen d'un vecteur ne comprenant que k composantes pour un ensemble de $2^k$ types d'événements. Ainsi, le mode de détection des transitions d'état par scrutation cyclique selon l'invention permet de réduire considérablement la taille des mémoires nécessaires pour stocker toutes les fonctions de commande prévisibles. De la sorte, le dispositif selon l'invention permet de prendre en compte tous les événements d'entrée qui peuvent affecter le comportement d'un système (pour autant que l'ingénieur système imagine ces événements), ce qui est particulièrement important dans les applications où aucune évolution imprévisible ne peut être tolérée, par exemple dans les applications de génie nucléaire.

Le dispositif selon l'invention permet donc la programmation en mémoire de toutes les fonctions, ce qui permet de supprimer l'utilisation d'un logiciel quelconque et, partant, d'assurer une vitesse d'exécution environ mille fois supérieure à celle des machines programmables classiques (vitesse de l'ordre de la microseconde au lieu de la milliseconde), combinant ainsi la souplesse de programmation des logiciels à la vitesse de fonctionnement des machines à logique câblée.

De plus, par suite de l'absence d'utilisation de tout logiciel, le développement et la programmation deviennent transparents pour l'ingénieur système, rendant ainsi inutile le programmeur habituellement chargé de traduire en routines les concepts de l'ingénieur système. Trop souvent, le programmeur, contrairement à l'ingénieur système, ne connaît pas le système physique et ajoute des sauvegardes et autres artifices de programmation qui compliquent et obscurcissent le fonctionnement du système. Celui-ci est alors masqué par le formalisme du logiciel qui, de moyen, a tendance à devenir une fin en soi. Le dispositif selon l'invention, par contre, assure une plus grande flexibilité de reprogrammation. En particulier, il est possible d'ajouter des variables d'entrée, des étapes et des transitions au processus de commande sans devoir pour autant modifier la structure préexistante: il s'agit là d'un découplage fort utile.

Enfin, la simplicité du séquenceur selon l'invention est telle que l'on peut se permettre d'associer un séquenceur séparé à chaque voie d'évolution parallèle. Le système d'évolutions parallèles associé au séquenceur selon l'invention permet pour la première fois la mise en oeuvre de véritables évolutions parallèles en temps réel entre des automates ou micro-ordinateurs rapides et aisément programmables.

Les avantages considérables du séquenceur programmable selon l'invention ouvrent de nouveaux champs d'application dont les limites des automates classiques leur interdisent l'accès. Le séquenceur selon l'invention apporte également une perspective nouvelle et une efficacité améliorée dans les applications habituelles des automates. Parmi les champs d'application les plus importants on peut citer, par exemple, l'automatisation des procédés de fabrication, la sécurité et les contrôles d'accès, l'industrie de la production et de la distribution d'électricité et plus généralement toute la gamme des industries informatiques. En particulier, on attend du séquenceur selon l'invention une révolution dans la commande des cellules flexibles et des progès importants dans la recherche d'architectures plus efficaces que celle de von Neumann pour les ordinateurs numériques.

L'invention est exposée en détails dans ce qui suit à l'aide d'un exemple de réalisation illustré sur les dessins ci-annexés. Dans ces dessins:

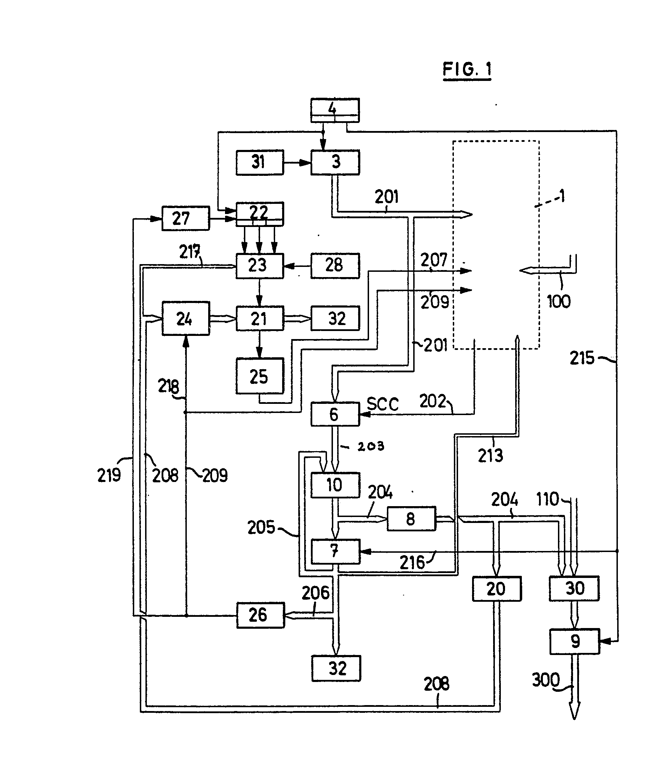

. la figure 1 est un schéma synoptique d'un exemple de réalisation du dispositif de commande selon l'invention;

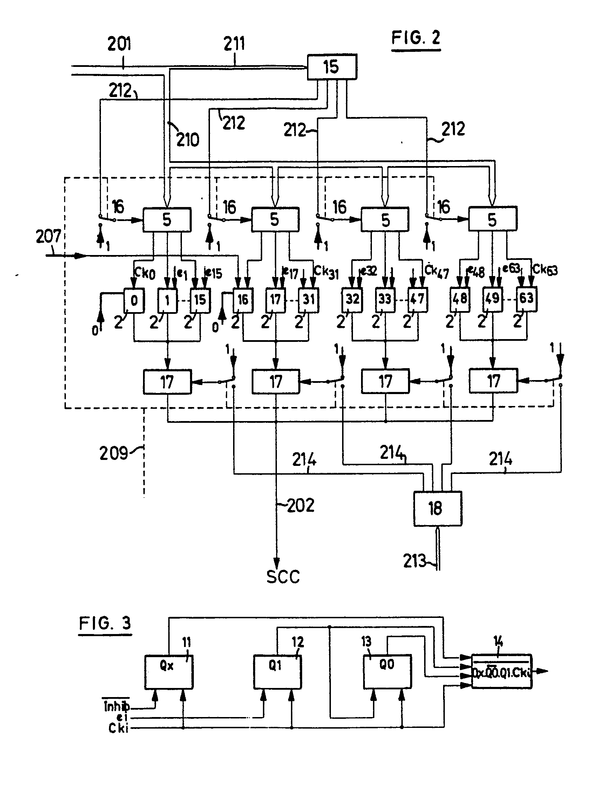

. la figure 2 est un schéma général d'un mode d'exécution du circuit de détection d'entrée montré à la figure 1;

. la figure 3 illustre un exemple de circuit utilisé comme détecteur de transition d'état.

Le dispositif selon l'invention est destiné à contrôler plusieurs variables de fonctionnement de dispositifs externes suivant une séquence de commande ayant un certain nombre d'étapes successives, chaque étape étant définie comme étant une collection d'états de signaux d'entrée qui déterminent un même état de sortie. Les différentes étapes de la séquence de commande sont emmagasinées dans des emplacements distincts d'une mémoire 10 appelée mémoire séquentielle. Cette mémoire est une mémoire programmable qui peut être une mémoire morte effaçable (EPROM) ou une mémoire à accès direct (RAM) par exemple. Dans le dispositif selon l'invention, chaque étape de la séquence de commande mémorisée dans la mémoire séquentielle est désignée par une adresse binaire définie par une transition d'une variable d'entrée.

Le dispositif selon l'invention est connecté pour recevoir un nombre N de signaux d'entrée de l'installation sous contrôle, chaque signal étant associé à une variable de fonctionnement particulière (paramètre physique) de ladite installation. Se reportant au schéma de la figure 1, les signaux sont reçus dans le bus 100 sur des voies d'entrée distinctes $e_1 \ldots e_n$ connectées à un circuit de détection d'entrée 1 ayant la fonction de détecter les transitions ou variations des signaux d'entrée en réponse à des signaux de scrutation successifs qui peuvent être produits par un dispositif approprié quelconque tel qu'un sélecteur commandé par une horloge ou un dispositif de scrutation binaire entraîné par une horloge.

Dans l'exemple de mode d'exécution illustré dans les dessins ci-annexés, les signaux de scrutation sont produits par un dispositif de scrutation binaire comprenant un compteur binaire 3 entraîné par une horloge 4 (figure 1) et un multiplexeur 5 (figure 2). La figure 2 est un schéma d'un mode d'exécution du circuit de détection d'entrée. Le compteur binaire 3 progresse sous la commande des impulsions d'horloge et à chaque impulsion, le contenu binaire du compteur 3 se trouve augmenté de manière à identifier successivement une voie d'entrée distincte. Le bloc désigné par la référence 31 représente un dispositif de verrouillage pour le compteur 3. La valeur binaire du compteur est lue par le bus 201 qui la transfère aux multiplexeurs 5 montrés à la figure 2 via un bus 210, et à la sortie de ces multiplexeurs 5 apparaissent les signaux de scrutation successifs $Ck_i$.

Dans le mode d'exécution illustré à la figure 2, le circuit de détection comprend soixante-quatre détecteurs de transition 2 subdivisés en quatre groupes de seize. Chaque détecteur, à l'exception des détecteurs nos 0 et 16 qui sont utilisés à des fins spéciales, a une entrée connectée à une voie d'entrée distincte $e_i$. Une autre entrée de chaque détecteur est connectée pour recevoir un signal

de scrutation respectif $Ck_i$. Les signaux de scrutation pour les détecteurs de chaque groupe sont produits aux sorties d'un multiplexeur d'une voie en seize 5 à partir des données présentes sur le bus 201 et dérivées par le bus 210. La sélection du multiplexeur de scrutation adéquat est laissée de côté pour le moment: elle sera décrite plus loin.

Le contenu binaire du compteur de scrutation 3 à chaque impulsion d'horloge identifie une voie d'entrée distincte et en réponse à ces données binaires, chaque multiplexeur 5 produit un 1 binaire à chacune de ses sorties successivement, de sorte qu'un signal de scrutation se trouve appliqué successivement à l'entrée de scrutation de chaque détecteur. En réponse à chaque signal de scrutation $Ck_i$, un détecteur 2 lit une voie d'entrée respective $e_i$ afin de détecter une éventuelle transition ou variation de signal sur cette voie.

Chaque détecteur de transition est par exemple constitué d'un registre à décalage à deux cellules 12, 13 connecté avec une porte de détection 14 comme montré à la figure 3. La bascule 11 est ignorée pour l'instant. La bascule 12 a une entrée connectée à la voie d'entrée $e_i$ et une autre entrée connectée pour recevoir le signal de scrutation $Ck_i$. La bascule 13 a une entrée connectée à la sortie Q1 de la bascule 12 et une autre entrée connectée pour recevoir le signal de scrutation. La sortie Qo de la bascule 13 ainsi que la sortie Q1 de la bascule 12 et le signal de scrutation $Ck_i$ sont appliqués à la porte de détection 14. Lors de l'apparition de chaque signal de scrutation pour la voie d'entrée $e_i$, le registre à décalage lit la valeur d'entrée $e_i$. Lorsque $e_i$ est 0, les sorties Qo et Q1 sont 0. Dès que $e_i$ est 1, un premier signal de scrutation donne la valeur Q1 Qo=10 et après un second signal de scrutation, la valeur de sortie est Q1 Qo=11. Le contenu du registre est 11 jusqu'à l'apparition d'une nouvelle transition sur la voie d'entrée $e_i$. La sortie de la porte 14 est 1 uniquement lorsque $Ck_i$=1, c'est-à-dire pendant un cycle du signal d'horloge. La bascule 11 est connectée pour recevoir un signal de niveau binaire externe $\overline{INHIB}$ et sa sortie Qx est connectée à la porte 14 de telle manière que la détection de transition sur la voie d'entrée $e_i$ puisse être inhibée en réponse au signal $\overline{INHIB}$.

Chaque signal de scrutation autorise ainsi périodiquement la lecture d'une voie d'entrée et le détecteur de transition 2 correspondant détermine si le signal d'entrée sur la voie à laquelle il est associé a subi une transition. De cette façon, deux transitions simultanées se trouvent séparées et détectées successivement dans l'ordre dans lequel les voies d'entrée se trouvent scrutées. Si une transition ne se trouvait pas détectée durant un cycle de scrutation, elle se trouverait automatiquement reprise pendant le cycle de scrutation suivant. Lorsque plusieurs signaux d'entrée peuvent subir une transition simultanée, il est possible d'imposer une évolution voulue dans toutes les séquences ordonnées de variations de ces signaux.

Grâce au fait que les signaux de détection de transition produits ne sont jamais simultanés, il devient donc possible de coder l'ensemble des événements possibles à un instant donné quelconque dans une séquence de commande au moyen d'un vecteur ne comprenant que k composantes pour un ensemble de $2^k$ types d'événements. Ainsi, le mode de détection des transitions par scrutation cyclique selon l'invention permet de réduire considérablement la taille des mémoires nécessaires pour stocker toutes les fonctions de commande prévisibles.

Les sorties des détecteurs de transitions sont réunies en une seule (somme logique) et dès que la sortie d'un détecteur est 1, c'est-à-dire dès qu'une transition est détectée, une valeur 1 apparaît sur la ligne de commande de changement d'étape 202 et cette valeur subsiste jusqu'à la fin d'un cycle entier du signal d'horloge. A ce moment, le signal de commande SCC sur la ligne 202 excite l'entrée de commande d'une porte de commande de changement d'étape 6 (figure 1). En réponse à ce signal SCC, la porte 6 recopie les données présentes sur le bus 201 dans le bus 203 de sorte que la valeur binaire dans le bus 203 identifie la voie d'entrée qui est associée à une transition de signal. Cette valeur binaire dans le bus 203 est utilisée pour adresser la mémoire séquentielle 10, de telle manière que les données emmagasinées à l'adresse désignée dans cette mémoire soient lues par le bus 204.

Les données lues par le bus 204 sont transférées dans un registre de bouclage 7 en réponse à l'impulsion d'horloge reçue de l'horloge 4 sur les lignes 215 et 216. En réponse à l'impulsion d'horloge suivante, le registre 7 transfère les données dans le bus 205 qui les recopie dans certaines positions binaires à l'entrée de la mémoire 10. De cette manière, la mémoire séquentielle fournit à tout moment l'information qui identifie l'étape suivante du processus de commande.

A titre d'exemple ou supposera que le système se trouve dans l'étape 0 et qu'une transition du signal sur le canal d'entrée $e_1$ doive faire passer le système dans l'étape 1 et qu'ensuite une transition de signal sur le canal d'entrée $e_5$ doive faire passer le système dans l'étape 7.

Lorsque le système se trouve dans l'étape 0, les six bits de plus faible poids dans le bus 203 sont des 0 et le système est stable. Les voies d'entrée, ainsi qu'il a été décrit plus haut, sont scrutées successivement en cycles successifs à mesure que le compteur de scrutation 3 avance en réponse aux impulsions d'horloge. A chaque pas dudit compteur, les données dans le bus 201 sont augmentées d'une unité. Lorsqu'une transition se trouve détectée sur la voie d'entrée $e_1$, les données dans le bus 203 prennent la valeur 1 et l'adresse identifiée dans le bus 203 est donc 000.

Lors se l'apparition de l'impulsion d'horloge suivante, l'adresse de la nouvelle étape est lue aux sorties de la mémoire séquentielle (bus 204) et recopiée dans les positions binaires de plus fort poids à l'entrée de la mémoire par l'intermédiaire du bus 205 tandis que les six bits de plus faible poids (bus 203) sont mis à 0 (valeur 000000).

L'information de nouvelle étape lue à la sortie de la mémoire séquentielle 10 est envoyée à la mémoire de temporisation 20 et à la mémoire de fonctions de sortie 30 et le système est de nouveau stable.

Lorsqu'une transition est ensuite détectée sur la voie d'entrée $e_5$, les données dans le bus 203 ont la valeur 5: les six bits de plus faible poids sont 000101. L'adresse de nouvelle étape est alors recopiée dans les sept positions binaires de plus fort poids lors de l'apparition de l'impulsion d'horloge suivante et les six bits de plus faible poids sont remis à 0. L'information de nouvelle étape recopiée dans le bus 204 à la sortie de la mémoire séquentielle 10 est alors recopiée dans les sept positions binaires de plus fort poids dans le bus 205 et le système est de nouveau stable. Et ainsi de suite.

Ainsi qu'il a été souligné précédemment les différents détecteurs de transitions dans tous les groupes de détecteurs sont validés successivement de manière à lire périodiquement chaque voie d'entrée successivement et la validation des détecteurs de transitions se fait par l'intermédiaire des multiplexeurs 5. La sélection du multiplexeur approprié est assurée par un signal de sélection de groupe produit par un sélecteur 15 en réponse à un code d'identification d'étape présent dans le bus 211 connecté à certaines lignes de bits du bus 201. Le signal de sélection de groupe est appliqué au multiplexeur 5 approprié par l'intermédiaire de la ligne 212 et d'un commutateur 16 répondant à un signal de commande de sélection reçu sur la ligne 209. La ligne de sortie commune de chaque groupe de détecteurs est connectée à la ligne de commande de changement d'étape 202 à travers un autre sélecteur 17 qui se trouve actionné en réponse à un signal de sélection de groupe appliqué à la ligne 214 par un détecteur de groupe d'étapes 18 qui répond à un signal de changement d'étape reçu dans le bus 213 venant du registre de bouclage 7 (figure 1). Les détecteurs de transitions 2 dans les différents groupes lisent ainsi cycliquement un certain nombre de voies d'entrée et le détecteur approprié dans le groupe sélectionné détecte si une transition s'est produite ou non sur la voie d'entrée correspondante. Il est bien évident que les détecteurs de transitions 2 peuvent aussi être connectés en un seul groupe, auquel cas les moyens de sélection dont question ci-avant sont omis.

Les données de nouvelle étape présentes dans le bus 204 sont appliquées à une mémoire de temporisation 20 qui emmagasine l'information représentant le délai de temporisation associé à chaque étape de la séquence de commande. En réponse aux données lues dans le bus 204, la mémoire de temporisation 20 délivre les données de temporisation correspondantes sur un bus de temporisation 208 qui aboutit à un circuit de contrôle de temporisation comprenant un compteur régressif 21 entraîné par des impulsions d'horloge produites par un générateur 22 sous la commande de l'horloge 4. La cadence des impulsions de temporisation (échelle des millisecondes, secondes ou minutes) est sélectionnée par un sélecteur 23 se trouvant sous la dépendance d'un dispositif de commande 28 en réponse à un signal binaire dérivé des données lues dans le bus de temporisation 208 par le bus 217.

Les données de temporisation lues dans la mémoire de temporisation 20 sont introduites dans le compteur 21 par l'intermédiaire d'une porte de temporisation 24. Lorsque le compteur 21 a régressé jusqu'à zéro, c'est-à-dire lorsque le temps de temporisation sélectionné est écoulé, il excite un détecteur de fin de temporisation 25 qui produit un signal de changement d'étape sur la ligne 207 connectée à une entrée du circuit de détection d'entrée 1, indiquant ainsi un changement d'étape.

Lorsqu'un changemennt d'étape se produit, ce qui est détecté par un détecteur de changement d'étape 26, le compteur 21 et le générateur de temporisation 22 sont remis à l'état initial (valeur de fin de temporisation) en réponse à un signal sur les lignes 218 et 219 respectivement.

Les blocs désignés par la référence numérique 32 représentent des dispositifs d'affichage organisés pour afficher le contenu du registre de bouclage 7 (données représentant l'étape présente) et le contenu du compteur de temporisation 21.

Les données présentes dans le bus 204 sont également écrites dans les mémoires de fonctions de sortie 30, éventuellement par l'intermédiaire de tampons 8 lorsque c'est nécessaire. Les mémoires de fonctions de sortie stockent les valeurs des fonctions de sortie. En réponse à chaque groupe de données dans le bus 204, la valeur de la fonction de sortie correspondante apparaît aux sorties des mémoires 30 et ces valeurs sont introduites dans un registre de synchronisation 9 en réponse à une impulsion d'horloge reçue sur la ligne 215, de manière à synchroniser les changements des valeurs de sortie avec les changements d'étape. Le registre 9 délivre dans le bus de sortie 300, les signaux de commande pour les dispositifs externes sous surveillance. Les mémoires de fonctions de sortie 30 sont également connectées pour recevoir des signaux de niveau ou d'alarme directement de l'installation sous surveillance sur le bus 110, de manière à permettre à ces signaux de niveau ou d'alarme de modifier les signaux de commande de sortie comme il convient.

Le séquenceur transitionnel selon l'invention présente un certain nombre d'avantages des points de vue de la vitesse de fonctionnement, de la souplesse, de la prévisibilité et de la maîtrise d'évolutions parallèles en temps réel, comme indiqué précédemment dans l'introduction de description.

Contrairement aux automates programmables connus qui ont une vitesse de traitement de l'ordre de la milliseconde le séquenceur transitionnel microprogrammable (STM) selon l'invention se caractérisé par une vitesse de traitement de l'ordre de la microseconde, ce qui lui permet de traiter un bien plus grand nombre de décisions entre la détection d'une transition d'entrée et le déclenchement réel d'un ordre de sortie. De plus, le séquenceur selon l'invention combine la vitesse de fonctionnement élevée des dispositifs de commande logique câblés et la souplesse de programmation des logiciels, ce qui permet une plus grande souplesse de reprogrammation par l'ingénieur système.

En ce qui concerne la prévisibilité, il faut remarquer qu'en général le nombre prohibitif de tous les états d'entrée possibles d'un système empêche une description exhaustive des évolutions dans les automates classiques dans lesquels il n'est possible de prévoir qu'un nombre limité de combinaisons des variables d'entrée. Avec le séquenceur transitionnel selon l'invention, par contre, il est possible de prendre en compte tous les événements d'entrée prévisibles et déterminer l'évolution du système pour toutes les combinaisons de signaux d'entrée (transitions indépendantes et non simultanées) qui peuvent affecter le comportement du système. Cet aspect est particulièrement important dans les applications où aucune évolution imprévisible ne peut être tolérée, par exemple dans le domaine de l'ingénierie nucléaire dans lequel les automates connus ne peuvent être utilisés. De plus, cette prévisibilité permet au séquenceur selon l'invention d'être utilisé comme détecteur de suites ordonnées dans les applications où un ordre de fonction ne peut être produit que lorsqu'une suite ordonnée d'actions sont exécutées, par exemple pour la commande de l'ouverture d'une porte à l'aide d'un clavier numérique. Ce type d'application ne peut être maîtrisé avec la souplesse voulue à l'aide d'automates classiques qui ne peuvent prendre en considération toutes les situations non acceptables possibles ni toutes les combinaisons binaires non acceptables possibles, même pour un petit nombre de combinaisons d'entrée.

Les avantages du séquenceur transitionnel selon la présente invention, comme indiqué précédemment, ouvrent de nouveaux champs d'applications tels que le domaine de la sécurité et des contrôles d'accès et il favorise des applications existantes telles que l'automatisaion de procédés de fabrication par exemple.

La grande souplesse de programmation et de reprogrammation du séquenceur transitionnel selon l'invention lui permet d'être utilisé comme détecteur de suites ordonnées dans le domaine de la sécurité et du contrôle d'accès, comme dit plus haut, afin d'autoriser l'accès à une installation par l'ouverture d'une porte ou d'un dispositif de sécurité uniquement lorsqu'une suite ordonnée d'actions sont exécutées tandis qu'une première manoeuvre qui ne fait pas partie de la suite ordonnée provoque immédiatement une alarme. Un détecteur de suites ordonnées peut aussi être utilisé comme dispositif de commande auxiliaire qui déclenche les excitations d'un dispositif de commande principal. Ces excitations sont alors provoquées, non plus par la transition d'une seule variable d'entrée, mais bien par une suite ordonnée de transitions de variables d'entrée. Le séquenceur transitionnel selon l'invention permet par conséquent de concevoir des systèmes de commande logique beaucoup plus complexes que ceux qu'il était possible de réaliser auparavant.

Dans le cas de l'automatisation de procédés de fabrication, une des questions fondamentales est le besoin de coordonner efficacement les diverses machines pour un coût le plus bas possible. Le séquenceur transitionnel selon l'invention, en raison de ses possibilités d'évolutions parallèles, permet une nouvelle approche du problème: plusieurs séquenceurs programmables, chacun d'eux commandant une machine distincte, peuvent travailler en parallèle et se transmettre l'un l'autre des messages visant à coordonner leurs fonctionnements respectifs. Cette approche est rendue possible par la vitesse élevée du séquenceur transitionnel selon l'invention et a pour résultat une commande améliorée de cellules flexibles.

Enfin, les possibilités d'évolutions parallèles que possède le séquenceur transitionnel selon l'invention lui permettent d'apporter un progrès significatif dans la technique du traitement des données en parallèle, selon laquelle les tâches sont réparties entre plusieurs processeurs locaux avec un échange constant d'information entre eux à des fins de surveillance et de coordination. Utilisé comme dispositif de commande d'interruption, le séquenceur transitionnel selon l'invention est capable de surveiller et diriger l'échange d'information entre des microordinateurs décentralisés: il se comporte comme une unité logique rapide qui impose les priorités dans la commande des interruptions de ces microordinateurs.

Il est bien évident que le séquenceur transitionnel selon l'invention peut être réalisé suivant divers modes d'exécution par l'homme de l'art. De plus, bien que dans ce qui précède le dispositif logique suivant l'invention ait été décrit pour exécuter des décisions logiques, il est entendu qu'un séquenceur transitionnel conforme à l'invention peut être réalisé de manière à comprendre ou à être connecté à un dispositif de traitement convenable en vue d'exécuter des fonctions arithmétiques et de calcul.

**Revendications**

1. Dispositif de commande logique pour la commande séquentielle du fonctionnement d'organes appartenant à une installation industrielle, la séquence de commande étant composée d'étapes successives d'un processus industriel, comprenant:

1) une mémoire séquentielle (10) dont chaque emplacement de mémorisation contient des données qui identifient l'étape suivante du processus, chaque emplacement étant identifié par la combinaison d'un signal d'étape actuelle et d'un signal d'adresse d'étape provenant d'un circuit de détection d'entrée (1),

2) le circuit de détection d'entrée (1) comprenant N détecteurs de transition d'état d'un signal d'entrée (2), chaque détecteur étant connecté pour recevoir un signal d'entrée distinct $(e_i)$ représentant l'état actuel d'un des organes précités et pour recevoir une impulsion de scrutation (Cki) distincte provenant d'un générateur d'impulsions de scrutation (3—5) engendrant N impulsions de scrutation régulièrement décalées dans le temps, chaque détecteur (2) étant agencé pour produire un signal de changement d'étape (SCC) lorsqu'une transition d'état du signal d'entrée se produit en même temps qu'une impulsion de scrutation (Cki),

3) un moyen (6) pour produire le signal d'adresse d'étape correspondant à la détection d'une transition d'état d'un signal d'entrée lorsqu'une transition d'état au moins s'est produite pendant le cycle de scrutation,

4) une mémoire de fonctions de sortie (30) pour stocker des signaux d'ordres identifiant les commandes pour les organes sous contrôle, la mémoire de fonctions de sortie étant connectée à la mémoire séquentielle afin de recevoir les données identifiant l'étape suivante et de délivrer les signaux d'ordres pour la commande des organes correspondants.

2. Dispositif selon la revendication 1, caractérisé en ce que le générateur d'impulsion de scrutation comprend un compteur binaire (3) entraîné par des signaux d'horloge (4) pour produire des signaux de données successifs identifiant chacun un signal d'entrée, et un multiplexeur (5) pour convertir les signaux de données du compteur binaire en impulsions successives pour les détecteurs de transition d'état (2), et en ce qu'il comprend une porte de commande de changement d'étape (6) répondant aux signaux produits par les détecteurs de transition d'état (2) afin d'accepter les signaux de données du compteur binaire (3) et produire un signal d'adresse correspondant pour la mémoire séquentielle (10).

3. Dispositif selon la revendication 1 ou 2, caractérisé en ce que les détecteurs de transition d'état (2) sont subdivisés en plusieurs groupes connectés en parallèles, ces groupes étant connectés successivement un à la fois par l'intermédiaire d'un sélecteur (15) afin de recevoir successivement chacun des signaux d'entrée et détecter une transition d'état de l'un quelconque de ces signaux d'entrée.

4. Dispositif selon la revendication 2 ou 3, caractérisé en ce que les détecteurs de transition d'état (2) comprennent un registre à décalage à deux cellules (12, 13) ayant une première entrée connectée à une voie d'entrée $(e_i)$, une deuxième entrée connectée pour recevoir une impulsion de scrutation respective (Cki) associée à la voie d'entrée et une troisième entrée connectée pour recevoir un signal de niveau binaire externe (Inhib) afin d'inhiber la détection d'une transition d'état d'un signal associé à la voie d'entrée et une porte logique (14) connectée au registre à décalage (12, 13) afin de combiner logiquement les sorties du registre à décalage et l'impulsion de scrutation (Cki) de manière à activer la porte de commande de changement d'étape (6) lors de la détection d'une transition d'état d'un signal d'entrée.

5. Dispositif selon l'une quelconque des revendications 1 à 4, caractérisé en outre par une mémoire de temporisation (20) pour emmagasiner des données d'intervalles de temps associées à chaque étape de la séquence de commande, ladite mémoire de temporisation étant adressée par les données de sortie de la mémoire séquentielle (10) afin de délivrer les données d'intervalles de temps associées à une voie d'entrée, et par un circuit de contrôle de temporisation comprenant un générateur de signaux de temps (22), un détecteur de changement d'étape (26) pour produire un signal de changement d'étape (ligne 219) lorsqu'un changement d'étape s'est produit, un compteur (21) pour compter les signaux de temps en réponse au signal de changement d'étape précité et aux données d'intervalles de temps lues dans la mémoire de temporisation (20) et pour produire un signal fin-de-temporisation afin d'amener le dispositif de commande dans une nouvelle étape identifiée par une adresse d'étape dans la mémoire séquentielle.

6. Dispositif selon la revendication 1, caractérisé en ce que la memoire de fonctions de sortie (30) présente des entrées supplémentaires pour recevoir des signaux directement des organes sous contrôle et pour modifier un signal de commande de sortie avec d'autres signaux de commande de sortie mémorisés dans la mémoire de fonctions de sortie (30) de manière à commander les organes sous contrôle suivant une séquence de commande prédéterminée mémorisée dans la mémoire de fonctions de sortie.

**Patentansprüche**

1. Vorrichtung zur Verknüpfungssteuerung für die Ablaufsteuerung des Betriebs von Elementen oder Organen, die zu einer industriellen Anlage gehören, wobei der Ablauf der Steuerung durch aufeinanderfolgende Stufen eines industriellen Prozesses gebildet wird, mit folgenden Merkmalen:

1) Ein Sequentiell-Speicher (10), dessen jeder Speicherplatz Daten enthält, welche die folgende Stufe des Prozesses kennzeichnen, wobei ein jeder Speicherplatz durch die Verknüpfung eines Signales für die aktuelle Stufe und eines von einem Eingangs-Detektions-Schaltkreis (1) stammenden Signales für die Stufen-Adresse gekennzeichnet ist;

2) der Eingangs-Detektions-Schaltkreis (1) weist N Detektoren (2) für den Uebergang des Zustandes eines Eingangssignals auf, wobei in diesem Schaltkreis jeder Detektor so geschaltet ist, um ein unterschiedliches Eingangssignal ($e_i$) zu empfangen, welches den aktuellen Zustand eines der vorgenannten Elemente oder Organe darstellt, und um einen unterschiedlichen Abfrageimpuls (Cki) zu empfangen, der von einem Abfrageimpulsgenerator (3—5) kommt, welcher N regelmäßig in der Zeit verschobene Abfrageimpulse erzeugt, und wobei jeder Detektor (2) in der Weise ausgebildet ist, daß er ein Signal (SCC) für eine Stufen-Aenderung erzeugt, wenn ein Uebergang des Zustandes des Eingangssignales zur gleichen Zeit wie ein Abfrageimpuls (Cki) auftritt;

3) eine Einrichtung (6) zum Erzeugen des Stufen-Adressen-Signales entsprechend der Erfassung eines Ueberganges des Zustandes eines Eingangssignales, wenn ein Uebergang des Zustandes zumindest während des Abfragezyklusses aufgetreten ist;

4) ein Speicher (30) für die Ausgangs-Funktionen zum Speichern von Befehlssignalen, welche die Befehle für die zu steuernden Organe oder Elemente kennzeichnen, wobei der Speicher für die Ausgangs-Funktionen mit dem Sequentiell-Speicher verbunden ist, um die die folgende Stufe kennzeichnenden Daten zu empfangen und die Befehlssignale zum Steuern der entsprechenden Organe oder Elemente abzugeben.

2. Vorrichtung nach Anspruch 1, dadurch gekennzeichnet, daß der Abfrageimpulsgenerator einen Binärzähler (3), welcher durch Taktsignale eines Taktgebers (4) beaufschlagt wird, um aufeinanderfolgende Datensignale zu erzeugen, von denen ein jedes ein Eingangssignal kennzeichnet, sowie einen Multiplexer (5) aufweist, um die Datensignale des Binärzählers in aufeinanderfolgende Impulse für die Detektoren (2) für den Uebergang des Zustandes umzuwandeln, und daß die Vorrichtung ein Gate (6) zur Steuerung der Aenderung der Stufe aufweist, wobei dieses Gate auf durch die Detektoren (2) für den Uebergang des Zustandes erzeugte Signale anspricht, um die Datensignale des Binärzählers (3) zu akzeptieren und ein entsprechendes Adressen-Signal für den Sequentiell-Speicher (10) zu erzeugen.

3. Vorrichtung nach Anspruch 1 oder 2, dadurch gekennzeichnet, daß die Detektoren (2) für den Uebergang des Zustandes in mehrere, parallel geschaltete Gruppen unterteilt sind, von denen nacheinander eine jede Gruppe insgesamt mittels eines Selektors (15) durchgeschaltet wird, um aufeinanderfolgend ein jedes der Eingangssignale zu empfangen und einen Uebergang des Zustandes irgendeines dieser Eingangssignale zu erfassen.

4. Vorrichtung nach Anspruch 2 oder 3, dadurch gekennzeichnet, daß die Detektoren (2) für den Uebergang des Zustandes ein Schieberegister mit zwei Zellen (12, 13) aufweisen, wobei dieses Schieberegister einen ersten, an einen Eingangskanal ($e_i$) angeschlossenen Eingang aufweist, einen zweiten, in der Weise angeschlossenen oder geschalteten Eingang, um einen dem Eingangskanal jeweils zugeordneten Abfrageimpuls (Cki) zu empfangen, sowie eine dritten, in der Weise angeschlossenen oder geschalteten Eingang, um ein Signal mit einem extern-binären Pegel (Inhib) zu empfangen, damit die Erfassung eines Ueberganges des Zustandes eines dem Eingangskanal zugeordneten Signales verzögert wird, und daß die Detektoren (2) ferner ein mit dem Schieberegister (12, 13) verbundenes Logik-Gate (14) aufweisen, um die Ausgänge des Schieberegisters und die Abfrageimpulse (Cki) logisch zu verknüpfen, derart, daß das Gate (6) zur Steuerung der Stufen-Aenderung bei der Erfassung eines Ueberganges des Zustandes eines Eingangssignales aktiviert wird.

5. Vorrichtung nach einem der Ansprüche 1—4, ferner gekennzeichnet durch einen Verweilzeitspeicher (20) zum Speichern von Zeit-Intervall-Daten, die einer jeden Stufe des Ablaufes der Steuerung zugeordnet sind, wobei dieser Verweilzeitspeicher durch die Ausgangs-Daten des Sequentiell-Speichers (10) adressiert wird, um die einem Eingangskanal zugeordneten Zeit-Intervall-Daten abzugeben, und durch einen Schaltkreis zur Kontrolle oder Ueberwachung der Verweilzeit, mit einem Zeitsignal-Generator (22), einem Stufen-Aenderungs-Detektor (26) zum Erzeugen eines Stufen-Aenderungs-Signales (Leitung 219), wenn eine Stufenänderung eintritt, einem Zähler (21) zum Zählen der Zeitsignale in Abhängigkeit von dem vorgenannten Stufen-Aenderungs-Signal und in Abhängigkeit von in dem Verweilzeitspeicher (20) gelesenen Zeit-Intervall-Daten und zum Erzeugen eines Verweilzeit-Ende-Signales, um die Steuervorrichtung zu einer neuen Stufe zu führen, die durch eine Stufen-Adresse in dem Sequentiell-Speicher gekennzeichnet ist.

6. Vorrichtung nach Anspruch 1, dadurch gekennzeichnet, daß der Speicher (30) für die Ausgangs-Funktionen zusätzliche Eingänge zum unmittelbaren Empfangen von Signalen der zu steuernden Organe oder Elemente und zum Modifizieren eines Ausgangs-Steuersignales mit anderen Ausgangs-Steuersignalen aufweist, die in dem Speicher (30) für die Ausgangs-Funktionen gespeichert sind, derart, daß die zu steuernden Organe oder ELemente nach Maßgabe eines in dem Speicher für die Ausgangs-Funktionen gespeicherten und vorbestimmten Steuerungs-Ablaufes gesteuert werden.

**Claims**

1. A logic controller for the sequential control of the operation of devices in an industrial installation, the control sequence including successive stages in an industrial process, said controller comprising:

1) a sequential memory (10) in which each location contains data identifying the next stage in the control sequence, each location being identified by the combination of a present stage signal and a stage address signal from an input detection circuit (1),

2) said input detection circuit (1) comprising N state transition detectors (2) for the input signals, each detector being connected to accept a dis-tinct input signal ($e_i$) representing the present state of one of said devices, and a distinct scanning pulse (Cki) from a scanning pulse generator (3—5) generating N scanning pulses at regularly offset times, each detector (2) being arranged to produce a state change signal (SCC) when a state transition of the input signal is received concurrently with a scanning pulse (Cki),

3) means (6) for producing the stage address signal corresponding to the detection of a state transition of an input signal when at least one state transition occurred during the scanning cycle,

4) an output function memory (30) for storing command signals identifying the controls for the controlled devices, the output function memory being connected to the sequential memory to read out the data identifying the next stage and to provide the command signals to control the corresponding devices.

2. Apparatus according to claim 1, characterised in that the scanning pulse generator comprises a binary counter (3) driven by clock signals (4) to produce successive data signals identifying each an input signal, and a multiplexer (5) to convert the data signals from the binary counter into successive pulses for the state transition detectors (2), and in that the apparatus comprises a stage change command gate (6) responding to the signals from the state transition detectors (2) for accepting the data signals from the binary counter (3) and producing a corresponding address signal for the sequential memory (10).

3. Apparatus according to claim 1 or 2, characterised in that the state transition detectors (2) are subdivided into several groups in parallel arrangement, these groups being successively connected one at a time through a selector (15) to accept successively each of the input signals and detect a state transition in any one of said input signals.

4. Apparatus according to claim 2 or 3, characterised in that the state transition detectors (2) comprise a two-bit shift register (12, 13) having a first input connected to an input channel ($e_i$), a second input connected to accept a respective scanning pulse (Cki) related to the input channel, and a third input connected to accept an external binary level signal (Inhib) to inhibit the detection of a state transition for a corresponding signal, and a logic gate (14) connected to the shift register (12, 13) to logically combine the outputs from the shift register together with the scanning pulse (Cki), thereby to enable the stage change command gate (6) at the time a state transition is detected in an input signal.

5. Apparatus according to any one of claims 1 to 4, further characterised by comprising a temporisation memory (20) for storing the temporisation data for each stage in the control sequence, said temporisation memory being addressed by the output data from the sequential memory (10) to read out the temporisation data related to an input channel, and temporisation control circuit comprising a timing signal generator (22), a stage change detector (26) arranged to produce a stage change signal (line 219) when a change of stage has occurred, a counter (21) to count down the timing signals in response to said stage change signal and the temporisation data read out from the temporisation memory (20) and to produce an end-of-temporisation signal to drive the controller into a new stage identified by a stage address in the sequential memory.

6. Apparatus according to claim 1, characterised in that the output function memory (30) has further entries to accept signals directly from the devices under control and to modify an output command signal together with other output command signals stored in the output function memory (30), thereby to command the devices under control following a predetermined control sequence as stored in the output function memory.

FIG. 1

FIG. 2

FIG. 3